# EUROPÄISCHE PATENTSCHRIFT

(11) **EP 0 927 599 B1**
(45) Veröffentlichungstag und Bekanntmachung des Hinweises auf die Patenterteilung: **16.05.2001**
(21) Anmeldenummer: 97121411.9
(22) Anmeldetag: 05.12.1997
(51) Int. Cl.: B23Q 1/01, B23Q 1/38, B23Q 1/58

(54) **Führungssystem für die Säule einer Werkzeugmaschine**
Guiding system for the upright of a machine tool
Système de guidage pour la colonne d'une machine-outil

(30) Priorität: 11.09.1997 ES 9701917
(43) Veröffentlichungstag der Anmeldung: 07.07.1999
(73) Patentinhaber: Soraluce, S. Coop, 20570 Bergara (Guipuzcoa) (ES)
(72) Erfinder: Ma Mendia, Angel, 20600 Eibar (Guipuzcoa) (ES)
(74) Vertreter: Möbus, Rudolf, Dipl.-Ing.

(56) Entgegenhaltungen:
- EP-A- 0 203 035
- EP-A- 0 695 601
- CH-A- 313 207
- CH-A- 684 434
- DE-A- 2 001 446
- FR-A- 1 432 740
- GB-A- 1 030 251
- PETER BAUMGARTNER: "The Art of Linear Motion" EUROPEAN PRODUCTION ENGINEERING., Bd. 19, Nr. 1/2, April 1995, Seiten 849-852, XP000516987 MUNCHEN DE

## Beschreibung

Aus der GB-A-1 030 251 ist eine Portalwerkzeugmaschine bekannt, bei der ein Werkzeugkopf an einem horizontalen Balken gelagert ist, wobei der horizontale Balken auf zwei senkrechten Säulen ruht, die auf Schienen links und rechts des Maschinenbetts geführt sind.

In "European Production Engineering", Vol. 19 (04/95) S. 49 bis 52 ist ein Schienenführungssystem für Werkzeugmaschinen mit Schwalbenschwanzführungen beschrieben.

Bei den Werkzeugmaschinen mit einer beweglichen Werkzeugsäule, so z. B. bei den kombinierten Fräs- und Bohrmaschinen, kennt man verschiedene Ausführungsformen für die Führung bzw. Steuerung dieser Säule in ihren Funktionsbewegungen im Verhältnis zu dem stationären Maschinenbett, wo das zu bearbeitende Werkstück befestigt wird. Bei diesen Lösungen handelt es sich im einzelnen um folgende:

Lösung A: Hier wird die Säule auf einem von dem stationären Maschinenbett getrennten Fundament angeordnet. In diesem Fall enthält dieses in seinem oberen Bereich zwei Führungen für einen Schlitten, der die Säule trägt. Dies ist beispielsweise der Fall bei dem Patent FR 2045259 von BERTHIEZ.

Eine Führungslösung dieses Typs ist auch Gegenstand des US-Patents 4,354,305 von PLUMMER.

Lösung B: In diesem Fall besitzt das stationäre Maschinenbett an einem seiner seitlichen Bereiche zwei senkrecht übereinander gelagerte Führungen, die die Säule im Verhältnis zu dem stationären Maschinenbett überhängend oder auskragend steuern.

Diese Lösung entspricht der des italienischen Patents 860163 von ERALDO.

Lösung C: Durch Erhöhung der Dimensionierung der Säule und folglich auch ihres Gewichts, wurde eine Führung entwickelt wie die der italienischen Firma MECOF S.r.l., worüber in der deutschen technischen Fachzeitschrift "Werkstatt und Betrieb", Ausgabe 113, Jahrgang 1980, auf Seiten 683 und 684, ein Bericht erschien.

Diese Lösung zeigt zwei Führungen und eine Lagerung. Die beiden Führungen befinden sich in einem Seitenteil des stationären Maschinenbetts, so wie dies auch bei der Lösung B der Fall war, und die Lagerung erfolgt auf einem Fundament, das sich auf der anderen Seite des stationären Maschinenbetts befindet.

Lösung D: Im Rahmen einer Entwicklung, die der Lösung von MECOF nachfolgte, ergab sich eine vierte Lösung, die der italienischen Firma MAUT zuzuschreiben ist und durch deren Patent EP 0 203 035 geschützt wurde, das als nächstliegender Stand der Technik augesehen wird.

Bei dieser Lösung gibt es zwei Führungen, d. h. die Lösung MAUT verzichtet im Vergleich zu der Lösung MECOF auf eine der beiden Führungen auf der gleichen Seite des stationären Maschinenbetts.

In der Tat gibt es bei dieser Lösung von MAUT eine Hauptführung mit einer freien Achse "X" auf einer Seite des stationären Maschinenbetts und eine sekundäre Führung, die sich auf der anderen Seite befindet.

Die Hauptführung garantiert die Präzision der Längsverschiebung der Säule, während die sekundäre Führung dann eingreift, wenn die Säule kippt. Diese sekundäre Führung wird auf einem Fundament angeordnet.

Dieses Konzept der Haupt- und Nebenführung bedingt, daß es eine absolute Parallelität zwischen beiden Führungen gibt, um die korrekte Gleitbewegung der Säule zu gewährleisten.

Wenn beide Führungen auf zwei im Prinzip voneinander unabhängigen Elementen ruhen, wie z. B. das stationäre Maschinenbett und das Fundament, so bedingt das Erfordernis, daß beide Führungen, die Haupt- und die Nebenführung, parallel sein müssen, zu einer sehr genauen Montage des stationären Maschinenbetts und des Fundaments - so daß diese Parallelität gewährleistet ist.

In der Praxis bedeutet dies, daß das Fundament normalerweise mit einem stationären Maschinenbett verbunden wird und beide mit einer untereinander sehr präzisen maschinellen Bearbeitung und Befestigung.

In der Tat bedarf es, wenn man das Fundament unabhängig von dem stationären Maschinenbett anordnet, für beide besonderer Fundamente, so daß die Parallelität von Haupt- und Nebenführungen garantiert werden kann. Diese Lösung ist so schwierig und kostenaufwendig, daß man in der Praxis normalerweise auf eine Lösung zurückgreift, die dadurch gekennzeichnet ist, daß man das Fundament und das stationäre Maschinenbett so verbindet, als wären beide ein einziges oder gemeinsames Teil, aber trotzdem, und wie wir dies vorstehend angedeutet haben, erfordert auch eine solche Lösung eine sehr präzise maschinelle Bearbeitung sowohl des Fundaments als auch des stationären Maschinenbetts und eine ebenso präzise Verbindung zwischen diesem und dem Fundament, was naturgemäß die Herstellung dieser Maschinen verteuert und kompliziert.

Gegenüber diesen Lösungen hat die Anmelderin ein neues Führungssystem gemäß Anspruch 1 entwickelt, das eine einzelne Führung verwendet, die an dem stationären Maschinenbett befestigt ist und eine einfache Abstützung der Säule auf einem eigenständigen Fundament aufweist.

Da es sich um eine einfache Abstützung der Säule auf dem Fundament handelt und nicht um eine Führung, bedarf es auch keiner Parallelität zwischen dem Fundament und dem stationären Maschinenbett, was die Notwendigkeit bestimmter, sehr präziser maschineller Bearbeitungen des stationären Maschinenbetts und des Fundaments und einiger genauer Befestigungen zwischen dem stationären Maschinenbett und dem Fundament beseitigt, Maßnahmen, die bis jetzt notwendig waren, um die notwendige Parallelität zwischen den Führungen zu garantieren. Hinzu kommt noch folgendes: Durch die der vorliegenden Erfindung zugrunde liegende Lösung wird das Fundament nicht an das stationäre Maschinenbett angebunden. Sie sind selbständig voneinander, und dies, ohne daß es notwendig sei, irgendwelche genauen und aufwendigen Fundamentierungen oder Gründungen vorzunehmen.

Um dies im Vergleich zu den herkömmlichen Lösungen zu erreichen, die durch Gleitprismenführungen, also durch Friktion, gekennzeichnet waren, ist bei der Lösung die einzige Führung ein Abrollsystem, bestehend vorzugsweise aus einer Reihe von Schlitten vorzugsweise in Form von Rollenrückführungen, die kraftschlüssig mit der Säule der Maschine verbunden sind und die durch Abrollen entlang einer für alle Schlitten gemeinsamen Schienenführung erstellt oder verändert werden. Diese Führungsschiene ist kraftschlüssig mit dem Maschinenbett verbunden. Die vorstehend genannten Schlitten und konkret deren Rollen, laufen auf Spuren oder Strecken der Führungsschiene und bilden einen entgegengehaltenen Schwalbenschwanz.

Auf diese Art und Weise kann die einzige Führung sowohl die Zugkräfte als auch die Druck- und seitlichen Kräfte auffangen, zusammen mit den Kippmomenten in den drei Achsen "x", "y" und "z", wobei es notwendig ist, diese Führung durch die einzige entgegengehaltene Abstützung zu ergänzen, bei der es sich vorzugsweise um Laufschuhe handelt, die auf einer Ablaufstrecke auf dem selbständigen Fundament ablaufen.

Fig. 1 zeigt schematisch und in teilweiser Querschnittsansicht eine Werkzeugmaschine, die aus einem Maschinenbett 4 und einer Säule 3 sowie dem der vorliegenden Erfindung zugrunde liegenden Führungssystem besteht.

Fig. 2 zeigt im Detail die Montage der Abstützung 2 in Gegenhalterung zu der einzigen Führung 1.

Fig. 3 zeigt im Detail die Montage der einzigen Führung 1.

Fig. 4 ist eine Aufrißansicht des Teils 3.2, das an einer Seite der Säule 3 befestigt ist und die Schlitten 1.1 umfaßt. Dargestellt ist auch die Führungsschiene 1.2, auch wenn diese an dem Maschinenbett 4 befestigt wird.

Fig. 5 zeigt die obere Grundrißansicht der Fig. 4.

Fig. 6 ist eine perspektivische und schematische Darstellung, die die drei Schlitten 1.1 mit ihrer gemeinsamen Führungsschiene 1.2 aufzeigt.

Fig. 7 ist eine perspektivische und schematische Darstellung, die eine mögliche praktische Form der Verwirklichung eines Schlittens 1.1 und der gemeinsamen Führungsschiene 1.2 zeigt.

Fig. 8 ist eine schematische Darstellung, bestehend aus drei Ansichten eines Schlittens 1.1 und der Führungsschiene 1.2, um aufzuzeigen, wie der Schlitten 1.1 die verschiedenen Lasten und Kippmomente aufzufangen in der Lage ist.

Fig. 9 ist eine Grundrißansicht des Teils 3.1, das Laufschuhe 2.1 für die Abstützung 2 des Systems umfaßt.

Fig. 10 zeigt eine Anwendung des der vorliegenden Erfindung zugrunde liegenden Systems an einer Werkzeugmaschine, deren Säule 3 über einem Trägerschlitten (Support) 6 angeordnet ist.

Gegenstand der vorliegenden Erfindung ist ein Führungssystem der Säule einer Werkzeugmaschine jenes Typs, wie er durch ein Maschinenbett 4 gekennzeichnet ist, auf dem das zu bearbeitende Werkstück befestigt wird, zusammen mit einer Säule 3, die den Kopf (Werkzeugträger) mit dem entsprechenden Werkzeug umfaßt.

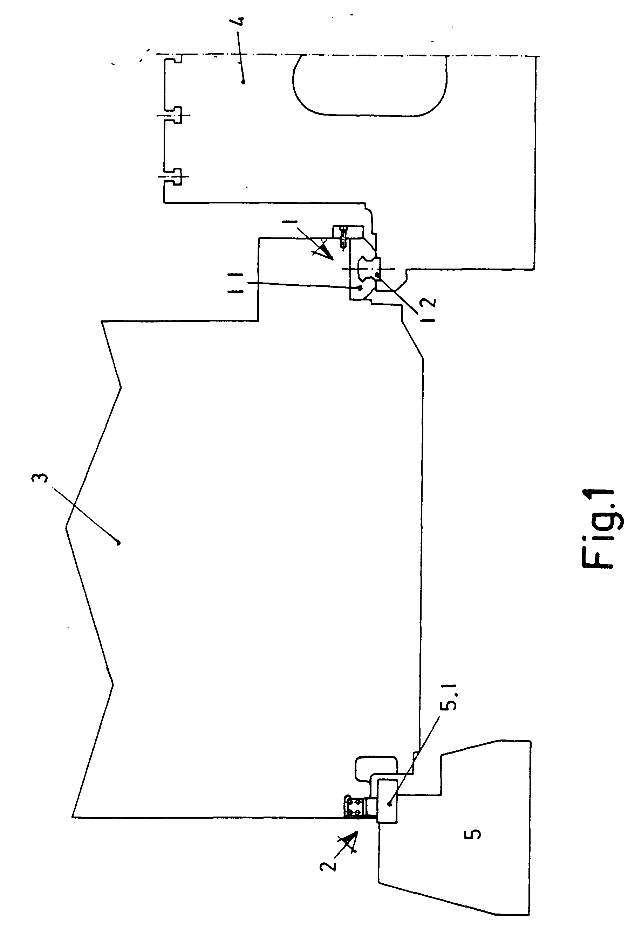

Im Einklang mit der Erfindung, und so wie dies schematisch in Fig. 1 aufgezeigt wird, erfolgt die Führung der Säule 3 im Verhältnis zu dem Maschinenbett 4 über eine einzige Führung 1 und eine einzige Abstützung 2, die der Führung 1 entgegengestellt ist. Diese Abstützung 2 bewirkt die Säule 3 auf einem Fundament 5, die gegenüber dem Maschinenbett 4 eigenständig ist.

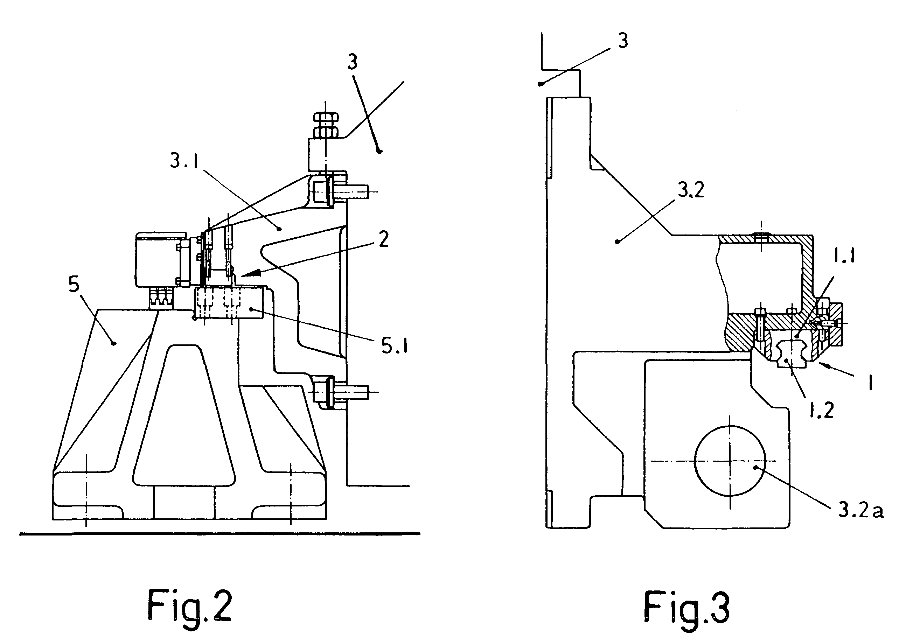

Die Einzeldarstellungen der Fig. 2 und 3 zeigen die Abstützung 2 und die Führung 1, und all dies im Sinne eines praktischen Lösungsmodells, das nicht Anspruch auf Ausschöpfung des Erfindungsgedankens erhebt.

In Fig. 2 erkennt man, wie die Säule 3 an einem Seitenteil ein künstliches Teil 3.1 besitzt, das kraftschlüssig mit der Säule 3 verbunden ist. An diesem Teil 3.1 ist die Stütze 2 im Verhältnis zu einer Ablauf- oder Rollbahn 5.1 befestigt, bestimmt durch eine erweiterte Schiene, die kraftschlüssig mit dem Fundament 5 verbunden ist. Diese Laufstrecke oder Laufbahn 5.1 verläuft dabei entlang des Fundaments 5.

In Fig. 3 erkennt man, wie die Säule 3 auf ihrer dem Teil 3.1 gegenüberliegenden Seite ein anderes künstliches Teil 3.2 besitzt, das kraftschlüssig mit der Säule 3 verbunden ist. Dieses Teil 3.2 weist eine Öffnung 3.2a für die Spindel auf, die die Bewegung der Säule 3 im Verhältnis zu dem Maschinenbett 4 steuert.

An dem Teil 3.2, das mit der Säule verbunden ist, werden die Bauteile der einzigen Führung 1 befestigt, bei der es sich um eine Abrollführung handelt, deren Aufbau wir nachstehend beschreiben wollen:

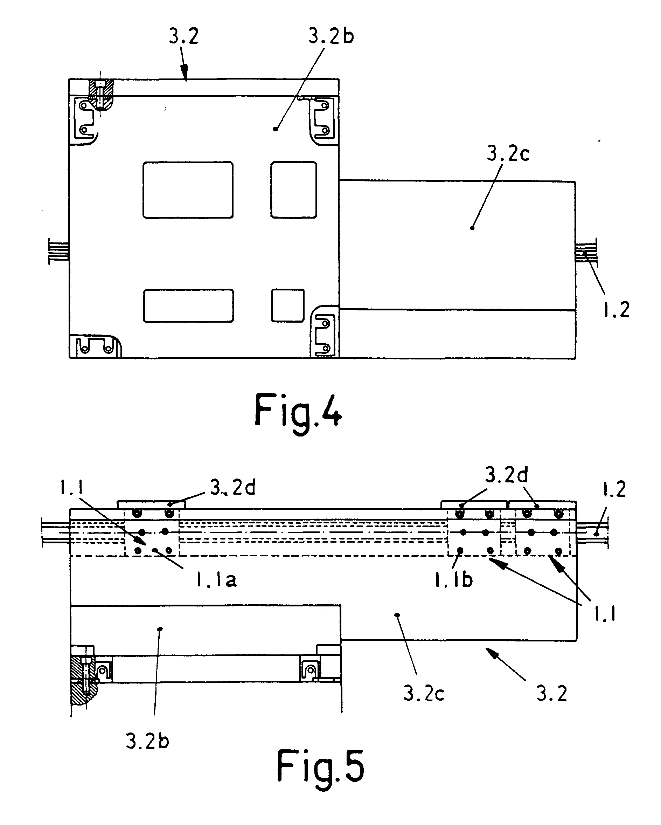

In den Fig. 4 und 5 erkennt man die Ausführung des künstlichen Teils 3.2, das gebildet wird durch einen Befestigungsteil 3.2b an der Säule 3 und einem erweiterten Teil 3.2c, an dem die Bauteile der einzigen Führung 1 befestigt werden.

Bei diesen Bauteilen handelt es sich um eine Reihe von lineargeführten Schlitten 1.1, die an dem Teil 3.2c des Teils 3.2 befestigt werden und die auf einer einzigen und gemeinsamen Führungsschiene 1.2 ablaufen können, die an dem Fundament 5 über die entsprechenden hier nicht dargestellten Schrauben befestigt ist.

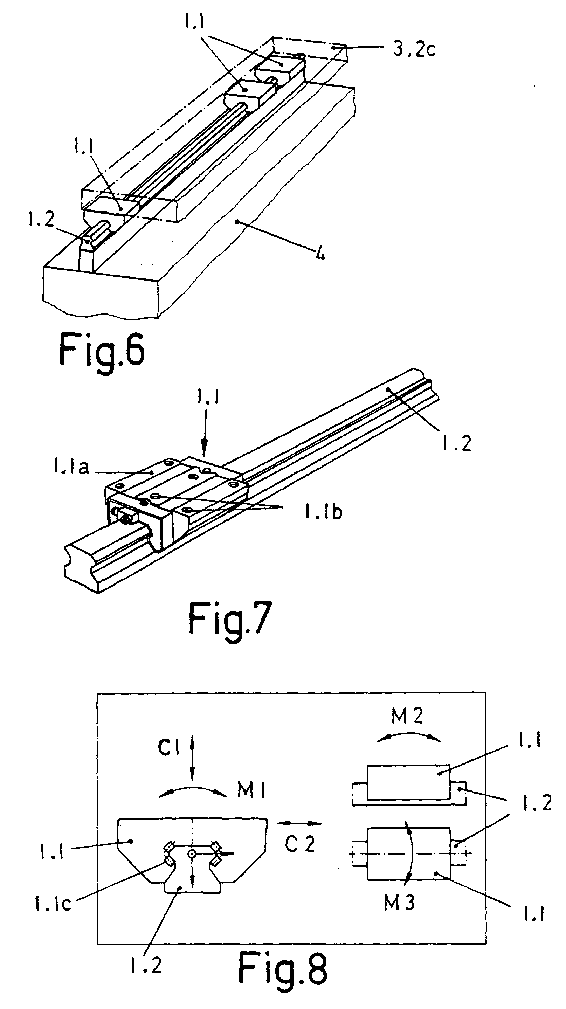

Gemäß dem Beispiel der praktischen Verwirklichung, die in den Fig. 5 und 6 dargestellt wird, aber nicht den Anspruch auf alleinige Lösung des Erfindungsgedankens erhebt, werden an dem Teil 3.2c des Teils 3.2 drei Schlitten 1.1 befestigt. Der Schlitten 1.1 besitzt ein Gehäuse aus Stahl 1.1a - siehe Fig. 7 - wo sich einige Öffnungen mit Schraubgewinde 1.1b befinden, durch die ein jeder Schlitten 1.1 mit dem Teil 3.2c des Teils 3.2 verschraubt wird. Im Verhältnis zu einem jeden Schlitten 1.1 wird eine kleine Anschlagplatine 3.2d befestigt, die gleichfalls mit dem Teil 3.2c des Teils 3.2 verschraubt wird.

Nach einer möglichen praktischen Verwirklichung des Erfindungsgedankens handelt es sich bei jedem Schlitten 1.1 um ein Element mit einem Rollenumlaufsystem 1.1c - siehe Fig. 8 - und konkret identisch mit den Systemen, die unter der Marke INA mit der Kennbezeichnung RUE hergestellt werden, wo die Rollen 1.1c auf Bahnen oder Strecken ablaufen, die einen entgegengesetzten doppelten Schwalbenschwanz bilden. Diese Laufstrecken sind nichts anderes als die Führungsschiene 1.2.

In Fig. 8 werden schematisch die verschiedenen Ausrichtungen der Lasten und Momente dargestellt, deren Einwirkung dieses Führungs- oder Leitsystem ausgesetzt ist. Somit werden durch den Pfeil C1 die Druck- und Zugbelastungen aufgezeigt, während der Pfeil C2 die seitlichen Lasteinwirkungen andeutet. Der Pfeil M1 zeigt die Momente in der Achse "x", während der Pfeil M2 die Momente in der Achse "z" anzeigt und der Pfeil mit der Kennzeichnung M3 zeigt schließlich die Momente in der Achse "y".

Auf diese Art und Weise ist das Führungs- oder Leitsystem im Sinne eines Ablaufs durch Rollenumkehrung und zusammengesetzt aus den Schlitten 1.1 und der Führungsschiene 1.2 in der Lage, allein die Zugkräfte, die Druckkräfte und die seitlichen Kräfte aufzufangen, zusammen mit den verschiedenen Kippmomenten, wodurch es möglich ist, daß durch ein einziges Führungs- oder Leitsystem 1 die notwendigen Verschiebungen oder Verlagerungen der Säule 3 gegenüber dem Maschinenbett 4 stattfinden können, unter Mitarbeit nur einer einzigen Abstützung 2 auf der Seite, die der einzigen Führung 1 gegenüberliegt.

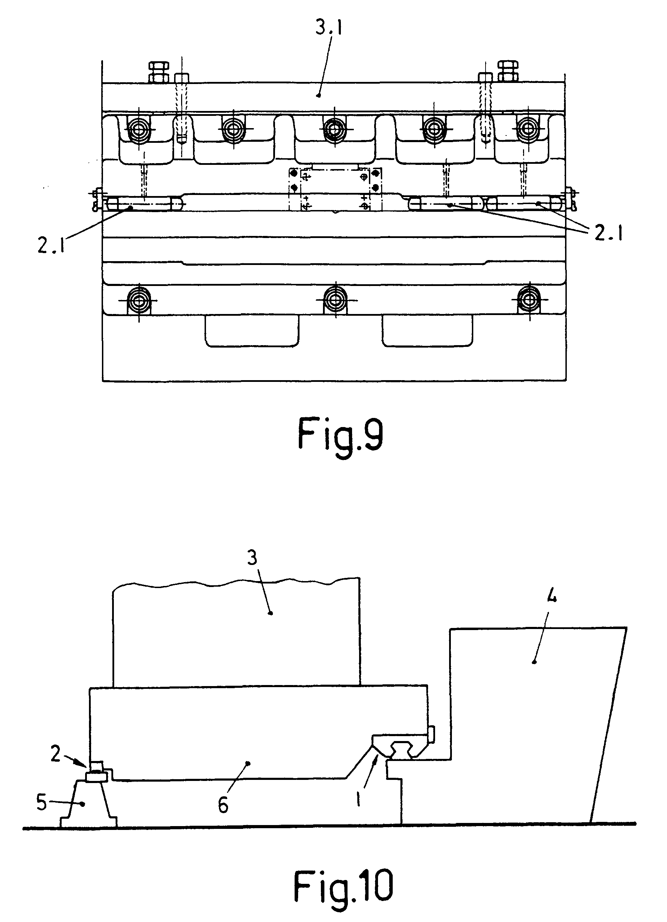

In diesem Sinne wurde in Fig. 9 das Teil 3.1 dargestellt, das die Stützelemente 2 aufzeigt. Es handelt sich um eine Grundrißansicht dieses Teils 3.1, die es ermöglicht, unter 2.1 Rollenkufen oder Gleitbacken erkennen zu lassen, wie jene, die unter dem Markenzeichen INA und der Kennbezeichnung RVSV vertrieben werden. Diese Rollen oder Gleitbacken 2.1, bei denen es sich in der Fig. 9 um insgesamt drei handelt, und die an dem Teil 3.1 angeschraubt sind, sind jene, die die Abstützung auf der Lauffläche oder -strecke 5.1 ermöglichen.

In Fig. 10 wird eine Ansicht analog der der Fig. 1 dargestellt, doch hier erfolgt die Anwendung des der vorliegenden Erfindung zugrunde liegenden Führungs- oder Leitsystems für den Fall, daß die Säule 3 auf einem Schlitten 6 ruht. Dadurch wird das wesentliche Kriterium der Erfindung beibehalten, denn es gibt auch hier weiterhin eine einzige Führung 1 und eine Abstützung 2, die in diesem Fall am Schlitten 6 befestigt werden.

## Patentansprüche

1. Führungs- oder Leitsystem der Werkzeughaltersäule (3) einer Werkzeugmaschine jenes Maschinentyps bei der die Werkzeughaltersäule (3) entlang einer Seite eines Maschinenbetts (4), auf dem die maschinell zu bearbeitenden Teile befestigt werden, geführt wird, dadurch gekennzeichnet, dass die Führung der Säule (3) über eine einzige Führung (1) zwischen der Säule (3) und dem Maschinenbett (4) erfolgt, ergänzt durch eine Abstützung (2) der Säule (3) auf einem gegenüber dem Maschinenbett (4) eigenständigen Fundament (5); wobei die Führung (1) eine Abrollführung und die Abstützung (2) gleichfalls eine Abrollstütze ist.

2. Führungs- oder Leitsystem nach Anspruch 1, dadurch gekennzeichnet, dass die Abrollführung (1) aus Schlitten (1.1), die an der Säule (3) angeordnet sind, und aus einer Führungsschiene (1.2), die allen Schlitten gemeinsam ist (1) und die auf dem Maschinenbett (4) befestigt wird, besteht.

3. Führungs- oder Leitsystem nach Anspruch 1 oder 2, dadurch gekennzeichnet, dass die Abstützung (2) der Säule (3) auf dem Fundament (5) über Rollenkufen (2.1) erfolgt, die auf einer Ablaufstrecke (5.1) verstellt werden, die an dem Fundament (5) befestigt ist.

4. Führungs- oder Leitsystem nach Anspruch 2 oder 3, dadurch gekennzeichnet, dass es sich bei den Schlitten (1.1) um solche mit Umlaufrädern handelt, die auf Strecken oder Bahnen der gemeinsamen Führungsschiene (1.2) laufen, wobei diese Strecken oder Bahnen durch einen zweifachen entgegengesetzten Schwalbenschwanz gekennzeichnet sind.

5. Führungs- oder Leitsystem nach Anspruch 2 und 3, dadurch gekennzeichnet, dass die Schlitten (1.1) an einem künstlichen Teil (3.2) befestigt werden, das kraftschlüssig an einem Seitenteil der Säule (3) befestigt ist, während die Rollenkufen (2.1) an einem gleichfalls künstlichen Teil (3.1) befestigt sind, das kraftschlüssig mit dem entgegengesetzten Seitenteil der Säule (3) verbunden ist, wobei diese künstlichen Teile (3.1) und (3.2) an den Seitenteilen eines Schlittens (6) befestigt werden, wenn die Säule (3) auf diesem ruht.

## Claims

1. A guide system or control system for the toolholder pillar (3) of a machine tool of the type of machine in which the toolholder pillar (3) is guided along a side of a machine bed (4) to which the parts which are to be machined are fixed, characterised in that guidance of the pillar (3) is effected via a single guide (1) between the pillar (3) and the machine bed (4), supplemented by the support (2) of the pillar (3) on a base (5) which is independent of the machine bed (4); wherein the guide (1) is a rolling guide and the support (2) is likewise a rolling support.

2. A guide system or control system according to claim 1, characterised in that the rolling guide (1) consists of slides (1.1) which are disposed on the pillar (3), and of a guide rail (1.2) which is common to all the slides (1) and is fixed to the machine bed (4).

3. A guide system or control system according to claims 1 or 2, characterised in that the support (2) of the pillar (3) on the base (5) is effected via rolling runners (2.1) which are moved on a feed section (5.1) which is fixed to the base (5).

4. A guide system or control system according to claims 2 or 3, characterised in that the slides (1.1) are slides comprising rotating wheels which run on sections or tracks of the common guide rail (1.2), wherein said sections or tracks are characterised by a double, opposed dovetail.

5. A guide system or control system according to claims 2 and 3, characterised in that the slides (1.1) are fixed to a manufactured part (3.2) which is non-positively fixed to a side part of the pillar (3), whilst the rolling runners (2.1) are fixed to a part which is also a manufactured part (3.1) which is non-positively attached to the opposite side part of the pillar (3), wherein said manufactured parts (3.1) and (3.2) are fixed to the side parts of a slide (6) when the pillar (3) rests on the latter.

## Revendications

1. Système de guidage ou de conduite de la colonne porte-outil (3) d'une machine-outil du type de machine dans lequel la colonne porte-outil (3) est guidée le long d'un côté d'un bâti de machine (4) sur lequel les pièces à usiner sont fixées mécaniquement, caractérisé en ce que le guidage de la colonne (3) s'effectue par l'intermédiaire d'un guidage unique (1) entre la colonne (3) et le bâti de machine (4), complété par un appui (2) de la colonne (3) sur une assise autonome (5) en vis-à-vis du bâti de machine (1) ; le guidage (1) étant un guide à roulement et l'appui (2) étant lui aussi un appui à roulement.

2. Système de guidage ou de conduite selon la revendication 1, caractérisé en ce que le guide à roulement (1) est constitué de chariots (1.1), qui sont disposés sur la colonne (3), et d'un rail de guidage (1.2), qui est commun à tous les chariots (1) et qui est fixé sur le bâti de machine (4).

3. Système de guidage ou de conduite selon la revendication 1 ou 2, caractérisé en ce que l'appui (2) de la colonne (3) sur l'assise (5) s'effectue par l'intermédiaire de patins roulants (2.1) qui sont déplacés sur un trajet de marche (5.1) qui est fixé à l'assise (5).

4. Système de guidage ou de conduite selon la revendication 2 ou 3, caractérisé en ce que les chariots (1.1) ont 'des roues rotatives qui circulent sur des trajets ou des pistes du rail de guidage commun (1.2), ces trajets ou pistes étant caractérisés par une queue d'aronde double opposée.

5. Système de guidage ou de conduite selon l'a revendication 2 ou 3, caractérisé en ce que les chariots (1.1) sont fixés à une pièce rapportée (3.2) qui est fixée par conjugaison de forces à une partie latérale de la colonne (3), tandis que les patins roulants (2.1) sont fixés à une pièce elle aussi rapportée (3.1) qui est reliée par conjugaison de forces à la partie latérale opposée de la colonne (3), ces pièces rapportées (3.1) et (3.2) étant fixées aux parties latérales d'un chariot (6) lorsque la colonne (3) repose sur celui-ci.
